# EUROPEAN PATENT APPLICATION

(11) **EP 4 734 481 A1**
(43) Date of publication of application: **29.04.2026**
(21) Application number: 24208671.8
(22) Date of filing: 24.10.2024
(51) Int. Cl.: H04L 65/80, H04L 65/612

(54) **A METHOD AND A DEVICE FOR ESTIMATING AVAILABLE TRANSMISSION BANDWITH ON A NETWORK CONNECTION**

(71) Applicant: Axis AB, 223 69 Lund (SE)
(72) Inventor: Bjäreholt, Johan, 223 69 Lund (SE); Cremon, Jonas, 223 69 LUND (SE)
(74) Representative: AWA Sweden AB

(57) **Abstract**

A method and a device for estimating available transmission bandwidth on a network connection over which data files are to be transmitted within a predetermined transmission time. A data file size is determined for a first data file to be transmitted over the network connection and a lowest average bitrate required to transmit the first data file within the predetermined transmission time is determined by dividing the data file size by the predetermined transmission time. A transmission time of the first data file is divided into one or more first time intervals and one or more second time intervals, wherein each of the one or more first time intervals is followed by a second time interval of the one or more second time intervals unless the first time interval is a last time interval. Data of the first data file are transmitted over the network connection during the one or more first time intervals at a bitrate higher than the determined lowest average bitrate. Remaining data of the first data file are transmitted over the network connection during the one or more second time intervals at a bitrate lower than the bitrate during the one or more first time intervals. The bitrate during the one or more second time intervals is such that a resulting average bitrate of the transmission of the first data file is equal to or higher than the determined lowest average bitrate but lower than a bitrate threshold. An available transmission bandwidth over the network connection is estimated based on feedback on the transmission of data of the first data file over the network connection during the one or more first time intervals at the bitrate higher than the determined lowest average bitrate.

## Description

### Technical field

The present invention relates to the field of network connection evaluation. In particular, it relates to a method and a device for estimating available transmission bandwith on a network connection.

### Background

In some applications, such as for video surveillance, data files are created in real time. When such files are created in a network connected device, such as a network connected camera, and are to be stored in a remote file storage, the data files need to be transmitted over a network connection to the remote file storage. In order to avoid that a local storage or memory in the network connected device becomes full, the data files need to be transmitted at a bitrate such that the date files in average are transmitted within the same amount of time as it takes to create the data files.

However, during some time periods the network connection may not provide a bitrate sufficient to transfer the data files in real time. During such time periods some type of reduction of size of the data files may be become necessary, such as by means of higher compression of the data files. On the other hand, compression reduces quality of the data files. Hence, it is desired to keep track of the transmission bandwidth available on the network connection. This may for example be done by transmitting a data file at a high bitrate and to estimate available transmission bandwidth based on feedback information received in relation to the transmission.

When transmitting data files over a network connection there are however typically limitations on the bitrate at which the data files may be transmitted. For example, high bitrate transmissions may affect other traffic in the network. Hence, transmission of data files at a high bitrate to estimate available transmission bandwidth may not be feasible. Hence, new ways of estimating available transmission bandwidth are desired.

### Summary of the invention

It is an objective of the present invention to mitigate the above problems and provide a new method and device for estimating available transmission bandwidth on a network connection.

According to a first aspect, a method is provided of estimating available transmission bandwidth on a network connection over which data files are to be transmitted within a predetermined transmission time and at an average bitrate lower than a bitrate threshold. The method comprises determining a data file size for a first data file to be transmitted over the network connection and dividing the data file size by the predetermined transmission time, thereby determining a lowest average bitrate required to transmit the first data file within the predetermined transmission time. The method further comprises dividing a transmission time of the first data file into one or more first time intervals and one or more second time intervals, wherein each one of the one or more first time intervals is followed by a second time interval of the one or more second time intervals unless the first time interval is a last time interval. The method further comprises transmitting data of the first data file over the network connection during the one or more first time intervals at a bitrate higher than the determined lowest average bitrate, and transmitting remaining data of the first data file over the network connection during the one or more second time intervals at a bitrate lower than the bitrate during the one or more first time intervals. The bitrate during the one or more second time intervals is such that a resulting average bitrate of the transmission of data during the one or more first time intervals and the one or more second time intervals is equal to or higher than the determined lowest determined average bitrate but lower than the bitrate threshold. The method further comprises estimating an available transmission bandwidth over the network connection based on feedback on the transmission of data of the first data file over the network connection during the one or more first time intervals at the bitrate higher than the determined lowest average bitrate.

By setting the bitrate during the one or more second time intervals lower than the bitrate during the one or more first time intervals to ensure that the resulting average bitrate is lower than the bitrate threshold, the one or more first time intervals can be used to probe the network connection using a higher bitrate without affecting other network traffic which would be the case for transmission over the bitrate threshold. Specifically, the available transmission bandwidth over the network connection can be estimated based on feedback on the transmission of data of the first data file over the network connection during the one or more first time intervals, i.e. on the higher than average bitrate transmissions.

Furthermore, transmission at a higher bitrate for a longer time interval will affect other traffic more than transmission at a higher bitrate during a shorter time interval. Hence, dividing the transmission time of the first data file into one or more first time intervals and one or more second time intervals and transmitting at a higher bitrate during the one or more first time intervals than in the one or more second time intervals will affect other traffic less than if transmission would have been at the higher bitrate for all of the first data file. This is because transmission at the higher bitrate will be during shorter time intervals. Furthermore, each of the one or more first time intervals will be followed by one of the one or more second time intervals. Hence, the one or more time intervals will come at a distance from each other with one of the one or more second time intervals having a lower bitrate. The higher bitrate transmissions during the one or more first time intervals can then be used to estimate the available transmission bandwidth over the network connection.

By 'lowest average bitrate required to transmit the first data file within the predetermined transmission time' is meant the average bitrate required to transmit the first data file at exactly the predetermined transmission time. A higher average bitrate than the determined lowest average bitrate will enable transmission at a shorter time than the predetermined transmission time which is also 'within' the predetermined transmission time.

Designating the time periods 'first time period' and 'second time period' is only intended to separate the two time periods from each other and is not intended to indicate any order of the time periods. The predetermined transmission time may be divided such that it is started with a second time period followed by a first time period or vice versa. Furthermore, the predetermined transmission time period may be ended with a first time period or with a second time period.

By a 'first time interval is a last time interval' is meant that data of the first data file sent during that first time interval is the last data of the first data filed to be sent.

The data files may be created and transmitted in sequence within a respective predetermined transmission time. The respective predetermined transmission time is determined based on a time it takes to create each data file such that the sum of the respective predetermined transmission time of each of the data files is equal to the sum of the time it takes to create each of the data files.

The data files are thus transmitted within the same time as the time it takes to create them. Hence, during the time of creating the data files, there is no increase in the amount of data of the data files that needs to be stored locally before sending it over the network connection.

The data files may further be created with a quality set for their respective time of transmission over the network connection. The method then further comprises setting the quality for a second data file subsequent to the first data file. The quality of the second data file is determined in relation to the quality of the first data file and is based on the estimated available network bandwidth. Specifically, a lower quality is set for the second data file than the quality of the first data file on condition that the estimated available transmission bandwidth is equal to or below a first bandwidth threshold. Furthermore, a higher quality is set for the second data file than the quality of the first data file on condition that the estimated available transmission bandwidth is equal to or above a second bandwidth threshold, wherein the second bandwidth threshold is higher than the first bandwidth threshold. Finally, the same quality is set for the second data file as the quality of the first data file on condition that the estimated available transmission bandwidth is between the first bandwidth threshold and the second bandwidth threshold. The quality of the data files may be set for their respective time of transmission over the network connection by setting a compression level. If the data files are video files which each comprises a plurality of image frames, the quality of the data files may in alternative or in addition be set for their respective time of transmission over the network connection by dropping a subset of the image frames, e.g., dropping every n:th image frame, thus lowering a frame rate, or dropping frames at a the end of a group of pictures.

By reducing the quality of the second data file in response to the estimated available transmission bandwidth being lower than or equal to the first bandwidth threshold, the size of the second data file is adapted such that it may be transmitted within the predetermined transmission time. By increasing the quality of the second data file in response to the estimated available transmission bandwidth being higher than or equal to the second bandwidth threshold, a higher quality of the second data file is enabled whilst still allowing it to be transmitted within the predetermined transmission time.

The data files may for example be media files.

The one or more first time intervals may be shorter than a time threshold. This is beneficial for example when the time period allowed with a higher bitrate is limited to the time threshold.

Each of the one or more second time intervals may be equally long as or longer than each of the one or more first time intervals.

The bitrate during the one or more second time intervals may be zero. By reducing the bitrate during the one or more second time intervals to zero the bitrate during the one or more first time intervals may be set higher whilst still maintaining the resulting average bitrate below the bitrate threshold.

The predetermined transmission time may be divided into a plurality of first time intervals and a plurality of second time intervals, that is there is always at least two first time intervals and at least two second time intervals. The more first time intervals, the more estimations of the available transmission bandwidth are made.

According to a second aspect a non-transitory computer-readable storage medium is provided having stored thereon instructions which, when executed in a device having at least one processor and a transmitter, causes the device to perform the method of the first aspect.

The above-mentioned further optional features of the method of the first aspect, when applicable, apply to the non-transitory computer-readable storage medium of the second aspect as well.

According to a second aspect a device is provided for estimating available transmission bandwidth on a network connection over which data files are to be transmitted within a predetermined transmission time and at an average bitrate lower than a bitrate threshold. The device comprises a transmitter and circuitry configured to execute a determining function, a first dividing function, a second dividing function, a first transmitting function, a second transmitting function, and an estimating function. The determining function is configured to determine a data file size for a first data file to be transmitted over the network connection. The first dividing function is configured to divide the data file size by the predetermined transmission time, thereby determining a lowest average bitrate required to transmit the first data file within the predetermined transmission time. The second dividing function is configured to divide a transmission time of the first data file into one or more first time intervals and one or more second time intervals, wherein each one of the one or more first time interval is followed by a second time interval of the one or more second time intervals unless the first time interval is a last time interval. The first transmitting function is configured to cause the transmitter to transmit data of the first data file over the network connection during the one or more first time intervals at a bitrate higher than the determined lowest average bitrate. The second transmitting function is configured to cause the transmitter to transmit remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold. The estimating function is configured to estimate an available transmission bandwidth over the network connection based on feedback on the transmission of data of the first data file over the network connection during the one or more first time intervals at the bitrate higher than the determined lowest average bitrate.

The above-mentioned further optional features of the method of the first aspect, when applicable, apply to the device of the third aspect as well.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1 is a flow chart of a method estimating available transmission bandwidth on a network connection according to embodiments.
Figure 2 schematically illustrates a device for estimating available transmission bandwidth on a network connection according to embodiments.

### Detailed description of embodiments

The present invention will now be described more fully hereinafter with reference to the accompanying drawings, in which embodiments of the invention are shown.

Embodiments of the present invention are applicable for estimation of available transmission bandwidth over a network connection in several scenarios. For example, the invention is applicable in scenarios where data files are created in a network connected device and are to be transmitted over a network connection in a network to a remote storage. In such scenarios, the amount of local storage or memory in the network connected device may be limited. Hence, the transmission time for each data file of the created data files should preferably be equal to or less than the time it takes to create the data file in order to avoid the need for increased amount of local storage before transmission. However, the available transmission bandwidth on the network connection may vary over time. If the variation is relatively small and relatively fast, this may be encompassed by transmission of some data files within a shorter transmission time than the time for their creation to compensate for other data files being transmitted within a longer transmission time than the time for their creation. If the variation is larger and more prolonged, such as a longer period of low available transmission bandwidth such that the transmission time of the data files have to be longer than the time it takes to create them, adaptations of the creation of the data files may need to be made. As an example, measures may be taken in order to reduce the size of newly created data files, such as reducing the quality of the data files. As measures such as reducing quality are generally undesirable, it is desirable to estimate the available transmission bandwidth of the network connection to identify when the quality can be increased again. At the same time the measures may be required in order for avoiding the risk of a data file being lost completely during low available transmission bandwidth due to a local storage becoming full.

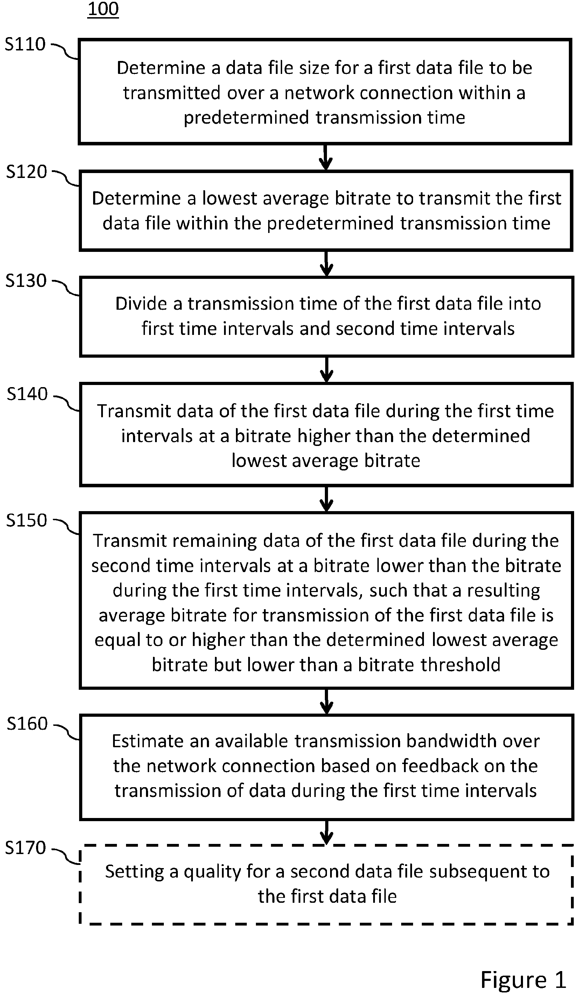

Embodiments of a method 100 estimating available transmission bandwidth on a network connection over which data files are to be transmitted within a predetermined transmission time and at an average bitrate lower than a bitrate threshold will now be described in relation to the flow chart in Figure 1. The details of transmission will depend on the protocol used on the network connection. For example, each data file may be transmitted as one HTTP request (PUT or POST).

The predetermined transmission time may vary between scenarios. For example, if the method 100 is applied in relation to a network connected surveillance camera which creates data files in the form of video files, such as MP4 files, the predetermined transmission time for each video will be the length in time of that video file. The video files may all be of the same length or they may have different lengths.

In the method 100 a data file size for a first data file to be transmitted over the network connection is determined S110. A lowest average bitrate required to transmit the first data file within the predetermined transmission time is then determined S120 by dividing the data file size by the predetermined transmission time. Hence, as long as the first data file is transmitted with an average bitrate that is equal to or higher than the determined lowest average bitrate, the first data file will be transmitted within the predetermined transmission time.

In the method 100, the data of the first data file is to be transmitted at different bitrates in different time intervals of the transmission time of the first data file. Specifically, the transmission time of the first data file is divided S130 into one or more first time intervals and one or more second time intervals which are alternated. That is, after a first time interval follows a second time interval and vice versa unless the time interval is a last time interval of the transmission time of the first data file. In some embodiments, the transmission time is divided into a plurality of first time intervals and a plurality of second time intervals.

During the one or more first time intervals, data of the first data file are transmitted S140 over the network connection at a bitrate higher than the determined lowest average bitrate.

During the one or more second time intervals, the remaining data of the first data file are transmitted S150 over the network connection at a bitrate lower than the bitrate during the one or more first time intervals. The bitrate during the one or more second time intervals is adapted such that the resulting average bitrate of the transmission of data during the one or more first time intervals and the one or more second time intervals is equal to or higher than the determined lowest average bitrate but lower than the bitrate threshold.

By transmitting data at a higher bitrate during the one or more first time intervals than the bitrate during the one or more second time intervals such that the resulting average bitrate during the transmission of the first data file is lower than the bitrate limit, a higher bitrate can be used during the one or more time intervals without the average being higher than the bitrate threshold. Each one of the higher bitrate transmissions during the one or more first time intervals can then be used to estimate the available transmission bandwidth over the network connection.

Dividing the transmission time into the one or more fist time intervals and one or more second time intervals and then using a respective bitrate for them is equivalent to dividing a data file into one or more first segments and one or more second segments and using a respective bitrate for the different segments of the data file. For example, first transmitting 4 Mbit at 4 Mbit/s followed by transmitting 2 Mbit at 2 Mbit/s etc. is equivalent to first transmitting at 4 Mbit/s for 1 s followed by transmitting at 2 Mbit/s for 1 s etc.

Furthermore, a transmission at a higher bitrate for a longer time interval will affect other traffic more than transmission at a higher bitrate during a shorter time interval. Hence, dividing the transmission time of the first data file into one or more first time intervals and one or more second time intervals and transmitting at a higher bitrate during the one or more first time intervals than in the one or more second time intervals will affect other traffic less than if transmission would have been at the higher bitrate for all of the first data file. This is because transmission at the higher bitrate will be during shorter time intervals. Each one of the higher bitrate transmissions during the one or more first time intervals can then be used to estimate the available transmission bandwidth over the network connection.

An available transmission bandwidth over the network connection is then estimated S160 based on feedback on the transmission of data of the first data file over the network connection during the one or more first time intervals at the bitrate higher than the determined lowest average bitrate.

For example, the available transmission bandwidth over the network connection may be estimated by first determining the time from when transmission started for a first time interval until a time when all data transmitted during the first time interval had been received at the remote storage as indicated in an acknowledgement message from the remote storage. The estimated available transmission bandwidth is then the amount of data transmitted during the first time interval divided by the determined time.

The bitrate during all of the one or more first time interval may be a same first bitrate that is higher than the determined lowest average bitrate. In alternative, the bitrate may differ between different ones of the one or more first time intervals, wherein each of the bitrates of the one or more first time intervals is higher than the determined lowest average bitrate.

Furthermore, the bitrate during all of the one or more second time intervals may be a same second bitrate lower than the first bitrate or than each of the bitrates of the one or more first time intervals. In alternative, the bitrate may differ between different ones of the one or more second time intervals, wherein each of the bitrates of the one or more second time intervals is lower than the first bitrate or than each of the bitrates of the one or more first time intervals.

The first time intervals all have the same length in time or they may have different lengths in time. Similarly, the second time intervals all have the same length in time or they may have different lengths in time. Also the first time intervals and the second time intervals may have the same length in time or they may have different lengths in time.

In some scenarios, there may be limitations on how long a transmission at a higher bitrate such as the bitrate during the one or more first time intervals may be. The one or more first time intervals may then be set shorter than a first time threshold based on these limitations.

There may be limitations on how close time periods with transmission at a higher bitrate such as the bitrate during the one or more first time intervals are allowed to be. Each of the one or more second time intervals may then be set equally long as or longer than each of the one or more first time intervals. Additionally, or alternatively, the one or more second time intervals may be set longer than a second time threshold set based on these limitations.

The bitrate during the one or more first time intervals and the bitrate during the one or more second time intervals are related in that the resulting average bitrate of the transmission of data during the one or more first time intervals and the one or more second time intervals should be equal to or higher than the determined lowest average bitrate. Hence, the larger the bitrate during the one or more first time intervals, the lower the bitrate needs to be during the one or more second time intervals and/or the longer each one of the one or more second time intervals needs to be in relation to the length of each one of the one or more second time intervals.

In an example, there are the same number of first time intervals as second time intervals and the one or more first time intervals each all have the length of 1 second and the one or more second time intervals each have the length of 1 second. If the bitrate during the one or more first time intervals is then set to 1.5 times the determined lowest average bitrate, it is sufficient for the bitrate during the one or more second time intervals to be 0.5 times the determined lowest average bitrate in order for the resulting average bitrate to be equal to or higher than the determined lowest average bitrate, i.e. such that the first data file is transmitted within the predetermined transmission time. If instead the bitrate during the one or more first time intervals is set to 2 times the determined lowest average bitrate, it is sufficient for the bitrate during the one or more second time intervals to be zero in order for the resulting average bitrate to be equal to or higher than the determined lowest average bitrate, i.e. such that the first data file is transmitted within the predetermined transmission time.

In another example, there are the same number of first time intervals as second time intervals, the bitrate during the one or more first time intervals is set to 3 times the determined lowest average bitrate, and the one or more first time intervals each have the length of 1 second and the one or more second time intervals each have the length of 3 seconds. Then it is sufficient for the bitrate during the one or more second time intervals to be 1/3 of the lowest average bitrate in order for the resulting average bitrate to be equal to or higher than the determined lowest average bitrate, i.e. such that the first data file is transmitted within the predetermined transmission time. If instead each of the second time intervals were 5 seconds long, it is sufficient for the bitrate during the one or more second time intervals to be 2/5 of the lowest average bitrate in order for the resulting average bitrate to be equal to or higher than the determined lowest average bitrate, i.e. such that the first data file is transmitted within the predetermined transmission time.

In embodiments, the data files are created and transmitted in sequence within a respective predetermined transmission time. The respective predetermined transmission time is determined based on a time it takes to create each data file such that the sum of the respective predetermined transmission time of each of the data files is equal to the sum of the time it takes to create each of the data files.

The data files are thus transmitted within the same time as the time it takes to create them. Hence, during the time of creating the data files, there is no increase in the amount of data of the data files that needs to be stored locally before sending it over the network connection.

The time it takes to create each data file and hence the respective predetermined transmission time may be the same for all data files or it may differ between data files.

For example, in a scenario where the data files are video files captured by a surveillance camera for transmission over a network connection to a remote storage, video files including same length videos may be created and then transmitted over the network connection within a same predetermined transmission time.

According to the method 100, an estimation of an available transmission bandwidth is provided based on the transmission of a first data file. This estimation may then be used to determine if the available transmission bandwidth is sufficient to transmit subsequent data files within the predetermined transmission time. If it is not, the size of one or more of the subsequent data files may need to be reduced in order to avoid loss of a subsequent data file due to a local storage becoming full before all of the subsequent data file has been transmitted. Similarly, the estimation may be used to determine if the available transmission bandwidth is sufficient to transmit data files without reduced size. If it is, the size of one or more of the subsequent data files may be sent without reduction of size.

Hence, in embodiments, the data files are created with a quality set for their respective time of transmission over the network connection. The quality is set based on the available transmission bandwidth estimated based on the transmission of a previous data file. The quality is further set in relation to the previous data file. This is to ensure that the data files can be transmitted within the predetermined transmission times for the data files. Hence, for a second data file subsequent to the first data file, the quality is set S170 in relation to the quality of the first data file based on the estimated available transmission bandwidth. Specifically, a lower quality is set for the second data file than the quality of the first data file on condition that the estimated available transmission bandwidth is equal to or below a first bandwidth threshold. Furthermore, a higher quality than the quality of the first data file is set for the second data file on condition that the estimated available transmission bandwidth is equal to or above a second bandwidth threshold, wherein the second bandwidth threshold is higher than the first bandwidth threshold. Finally, the same quality as the quality of the first data file is set for the second data file on condition that the estimated available transmission bandwidth is between the first bandwidth threshold and the second bandwidth threshold.

In other embodiments, the quality is set based on the available transmission bandwidth estimated based on the transmission of a previous data file without relation to the previous data file. This is to ensure that each data file can be transmitted within the predetermined transmission time for the data file based on the estimated available transmission bandwidth. Hence, for a second data file subsequent to the first data file, the quality is set S170 based on the estimated available transmission bandwidth such that a size of the second data file based on the set quality enables transmission within the predetermined transmission time based on the estimated available transmission bandwidth.

In some embodiments, the quality of the data files is set for their respective time of transmission over the network connection by setting a compression level. By increased compression, the size of a data file will be reduced which enables transmission within the predetermined transmission time even with restricted available transmission bandwidth.

In scenarios where the data files are video files, each comprising a plurality of image frames, the quality of the data files may be set by dropping a subset of the image frames. By dropping a subset of the image frames, the size of a data file will be reduced which enables transmission within the predetermined transmission time even with restricted available transmission bandwidth. For example, every n:th image frame or a certain type of image frames may be dropped in order to reduce the size of the video file, or image frames at an end a group of pictures may be dropped.

In addition to being video files, the data files may be any kind of media files, such as for example audio files, video files including also audio etc.

The method 100 relates to transmission of a first data file which should be sent within the predetermined transmission time. The resulting average bitrate is allowed to be higher than the determined lowest average bitrate. Hence, the transmission of the first data file may take a shorter time than the predetermined transmission time as long as the resulting average bitrate is less than the bitrate threshold. This may be true also for further data files of the data files to be transmitted.

Generally, the method 100 can be used in relation to data files that in average are transmitted within the predetermined transmission time. For one or more other data files, transmission of the respective other data file may be allowed to take a longer time than the predetermined transmission time. However, to avoid that a local storage becomes full, transmissions of one or more data file that each takes a longer time than the predetermined transmission time, should be followed by transmissions of one or more data files that each takes a shorter time than the predetermined transmission time.

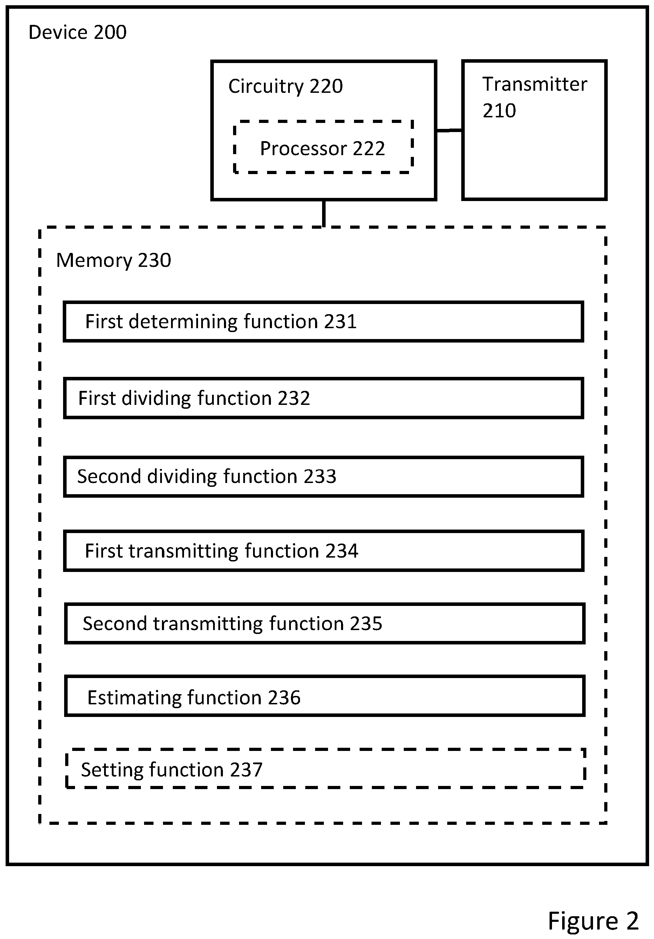

Figure 2 shows a block diagram in relation to embodiments of a device 200 for estimating available transmission bandwidth on a network connection over which data files are to be transmitted within a predetermined transmission time at an average bitrate lower than a bitrate threshold. The device 500 may for example be a camera, be included in a camera or be connected to a camera.

The device 200 comprises a transmitter 210 and a circuitry 220. The circuitry 220 is configured to carry out functions of the device 200. The circuitry 220 may include a processor 222, such as for example a central processing unit (CPU), graphical processing unit (GPU), tensor processing unit (TPU), microcontroller, or microprocessor. The processor 222 is configured to execute program code. The program code may for example be configured to carry out the functions of the device 200.

The device 200 may further comprise a memory 230. The memory 230 may be one or more of a buffer, a flash memory, a hard drive, a removable media, a volatile memory, a non-volatile memory, a random access memory (RAM), or another suitable device. In a typical arrangement, the memory 230 may include a non-volatile memory for long term data storage and a volatile memory that functions as device memory for the circuitry 220. The memory 230 may exchange data with the circuitry 220 over a data bus. Accompanying control lines and an address bus between the memory 230 and the circuitry 220 also may be present. Functions of the device 200 may be embodied in the form of executable logic routines (e.g., lines of code, software programs, etc.) that are stored on a non-transitory computer readable medium (e.g., the memory 230) of the device 200 and are executed by the circuitry 220 (e.g., using the processor 222). Furthermore, the functions of the device 200 may be a stand-alone software application or form a part of a software application that carries out additional tasks related to the device 500. The described functions may be considered a method that a processing unit, e.g., the processor 222 of the circuitry 220 is configured to carry out. Also, while the described functions may be implemented in software, such functionality may as well be carried out via dedicated hardware or firmware, or some combination of hardware, firmware and/or software.

The circuitry 220 is configured to execute a first determining function 231, a first dividing function 232, a second dividing function 233, a first transmitting function 234, a second transmitting function 235, and an estimating function 236. The circuitry 220 is further optionally configured to execute a setting function 237.

The determining function 231 is configured to determine a data file size for a first data file to be transmitted over the network connection.

The first dividing function 232 is configured to divide the data file size by the predetermined transmission time, thereby determining a lowest average bitrate required to transmit the first data file within the predetermined transmission time.

The second dividing function 233 is configured to divide a transmission time of the first data file into one or more first time intervals and one or more second time intervals, wherein each one of the one or more first time interval is followed by a second time interval of the one or more second time intervals unless the first time interval is a last time interval.

The first transmitting function 234 is configured to cause the transmitter to transmit data of the first data file over the network connection during the one or more first time intervals at a bitrate higher than the determined lowest average bitrate.

The second transmitting function 235 is configured to cause the transmitter to transmit remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold.

The estimating function 236 is configured to estimate an available transmission bandwidth over the network connection based on feedback on the transmission of data of the first data file over the network connection during the one or more first time intervals at the bitrate higher than the determined lowest average bitrate.

The data files may be created with a quality set for their respective time of transmission over the network connection. The circuitry is then further configured to execute the setting function 237. The setting function 237 configured to set the quality for a second data file subsequent to the first data file, wherein the quality for the second data file is determined in relation to the quality for the first data file and is based on the estimated available transmission bandwidth. Specifically, a lower quality is set for the second data file than the quality of the first data file on condition that the estimated available transmission bandwidth is equal to or below a first bandwidth threshold. Furthermore, a higher quality is set for the second data file than the quality of the first data file on condition that the estimated available transmission bandwidth is equal to or above a second bandwidth threshold, wherein the second bandwidth threshold is higher than the first bandwidth threshold. Finally, the same quality is set for the second data file as the quality of the first data file on condition that the estimated available transmission bandwidth is between the first bandwidth threshold and the second bandwidth threshold.

The above-mentioned further optional features of the method of the first aspect, when applicable, apply to the non-transitory computer-readable storage medium of the second aspect as well.

The detailed description of the acts of the method 100 described in relation to Figure 1 hereinabove apply also for the corresponding functions of the device 200. Furthermore, the optional additional features of the method 100 described in relation to Figure 1 hereinabove, when applicable, apply also to the device 200.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method of estimating available transmission bandwidth on a network connection over which data files are to be transmitted within a predetermined transmission time and at an average bitrate lower than a bitrate threshold, the method comprising:
determining a data file size for a first data file to be transmitted over the network connection;
dividing the data file size by the predetermined transmission time, thereby determining a lowest average bitrate required to transmit the first data file within the predetermined transmission time;
dividing a transmission time of the first data file into one or more first time intervals and one or more second time intervals, wherein each of the one or more first time intervals is followed by a second time interval of the one or more second time intervals unless the first time interval is a last time interval;
transmitting data of the first data file over the network connection during the one or more first time intervals at a bitrate higher than the determined lowest average bitrate;
transmitting remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold; and
estimating an available transmission bandwidth over the network connection based on feedback on the transmission of data of the first data file over the network connection during the one or more first time intervals at the bitrate higher than the determined lowest average bitrate.

2. The method according to claim 1, wherein the data files are created and transmitted in sequence within a respective predetermined transmission time, wherein the respective predetermined transmission time is determined based on a time it takes to create each data file such that the sum of the respective predetermined transmission time of each of the data files is equal to the sum of the time it takes to create each of the data files.

3. The method according to claim 1 or 2, wherein the data files are created with a quality set for their respective time of transmission over the network connection, further comprising:
setting the quality for a second data file subsequent to the first data file, wherein the quality of the second data file is determined in relation to the quality of the first data file and is based on the estimated available transmission bandwidth, such that:
on condition that the estimated available transmission bandwidth is equal to or below a first bandwidth threshold, setting a lower quality for the second data file than the quality of the first data file;
on condition that the estimated available transmission bandwidth is equal to or above a second bandwidth threshold, setting a higher quality for the second data file than the quality of the first data file, wherein the second bandwidth threshold is higher than the first bandwidth threshold; and
on condition that the estimated available transmission bandwidth is between the first bandwidth threshold and the second bandwidth threshold, setting the same quality for the second data file as the quality of the first data file.

4. The method of claim 3, wherein the quality of the data files is set for their respective time of transmission over the network connection by setting a compression level.

5. The method of claim 3, wherein the data files are video files, each comprising a plurality of image frames, wherein the quality of the data files is set for their respective time of transmission over the network connection by dropping a subset of the image frames.

6. The method according to any one of the preceding claims, wherein the data files are media files.

7. The method according to any one of the preceding claims wherein the one or more first time intervals are shorter than a time threshold.

8. The method according to any one of the preceding claims, wherein each of the one or more second time intervals is equally long as or longer than each of the one or more first time intervals.

9. The method according to any one of the preceding claims, wherein the predetermined transmission time is divided into a plurality of first time intervals and a plurality of second time intervals.

10. A non-transitory computer-readable storage medium having stored thereon instructions which, when executed in a device having at least one processor and a transmitter, causes the device to perform the method according to any one of claims 1 to 8.

11. A device for estimating available transmission bandwidth on a network connection over which data files are to be transmitted within a predetermined transmission time at an average bitrate lower than a bitrate threshold, the device comprising:
a transmitter; and
circuitry configured to execute:
a determining function configured to determine a data file size for a first data file to be transmitted over the network connection;
a first dividing function configured to divide the data file size by the predetermined transmission time, thereby determining a lowest average bitrate required to transmit the first data file within the predetermined transmission time;
a second dividing function configured to divide a transmission time of the first data file into one or more first time intervals and one or more second time intervals, wherein each of the one or more first time intervals is followed by a second time interval of the one or more second time intervals unless the first time interval is a last time interval;
a first transmitting function configured to cause the transmitter to transmit data of the first data file over the network connection during the one or more first time intervals at a bitrate higher than the determined lowest average bitrate;
a second transmitting function configured to cause the transmitter to transmit remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold; and
an estimating function configured to estimate an available transmission bandwidth over the network connection based on feedback on the transmission of data of the first data file over the network connection during the one or more first time intervals at the bitrate higher than the determined lowest average bitrate.

12. The device according to claim 11, wherein the data files are created and transmitted in sequence within a respective predetermined transmission time, wherein the respective predetermined transmission time is determined based on a time it takes to create each data file such that the sum of the respective predetermined transmission time of each of the data files is equal to the sum of the time it takes to create each of the data files.

13. The device according to claim 11 or 12, wherein the data files are created with a quality set for their respective time of transmission over the network connection, wherein the circuitry is further configured to execute:
a setting function configured to set the quality for a second data file subsequent to the first data file, wherein the quality for the second data file is determined in relation to the quality for the first data file and is based on the estimated available transmission bandwidth, such that:
on condition that the estimated available transmission bandwidth is equal to or below a first bandwidth threshold, setting a lower quality for the second data file than the quality of the first data file;
on condition that the estimated available transmission bandwidth is equal to or above a second bandwidth threshold, setting a higher quality for the second data file than the quality of the first data file, wherein the second bandwidth threshold is higher than the first bandwidth threshold; and
on condition that the estimated available transmission bandwidth is between the first bandwidth threshold and the second bandwidth threshold, setting the same quality for the second data file as the quality of the first data file.

14. The device according to any one of the claims 11-13, wherein the data files are media files.

15. The device according to any one of the claims 10-13, wherein the one or more first time intervals are shorter than a time threshold.

## Amended claims

### Amended claims in accordance with Rule 137(2) EPC.

1. A method (100) of estimating available transmission bandwidth on a network connection over which data files are to be transmitted within a predetermined transmission time and at an average bitrate lower than a bitrate threshold, the method comprising:
determining (S110) a data file size for a first data file to be transmitted over the network connection;
dividing (S120) the data file size by the predetermined transmission time, thereby determining a lowest average bitrate required to transmit the first data file within the predetermined transmission time;
dividing (S130) a transmission time of the first data file into one or more first time intervals and one or more second time intervals, wherein each of the one or more first time intervals is followed by a second time interval of the one or more second time intervals unless the first time interval is a last time interval;
transmitting (S140) data of the first data file over the network connection during the one or more first time intervals at a bitrate higher than the determined lowest average bitrate;
transmitting (S150) remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold; and
estimating (S160) an available transmission bandwidth over the network connection based on feedback on the transmission of data of the first data file over the network connection during the one or more first time intervals at the bitrate higher than the determined lowest average bitrate.

2. The method (100) according to claim 1, wherein the data files are created and transmitted in sequence within a respective predetermined transmission time, wherein the respective predetermined transmission time is determined based on a time it takes to create each data file such that the sum of the respective predetermined transmission time of each of the data files is equal to the sum of the time it takes to create each of the data files.

3. The method (100) according to claim 1 or 2, wherein the data files are created with a quality set for their respective time of transmission over the network connection, further comprising:
setting (S170) the quality for a second data file subsequent to the first data file, wherein the quality of the second data file is determined in relation to the quality of the first data file and is based on the estimated available transmission bandwidth, such that:
on condition that the estimated available transmission bandwidth is equal to or below a first bandwidth threshold, setting a lower quality for the second data file than the quality of the first data file;
on condition that the estimated available transmission bandwidth is equal to or above a second bandwidth threshold higher than the first bandwidth threshold, setting a higher quality for the second data file than the quality of the first data file, wherein the second bandwidth threshold is higher than the first bandwidth threshold; and
on condition that the estimated available transmission bandwidth is between the first bandwidth threshold and the second bandwidth threshold, setting the same quality for the second data file as the quality of the first data file.

4. The method (100) of claim 3, wherein the quality of the data files is set for their respective time of transmission over the network connection by setting a compression level.

5. The method (100) of claim 3, wherein the data files are video files, each comprising a plurality of image frames, wherein the quality of the data files is set for their respective time of transmission over the network connection by dropping a subset of the image frames.

6. The method (100) according to any one of the preceding claims, wherein the data files are media files.

7. The method (100) according to any one of the preceding claims wherein the one or more first time intervals are shorter than a time threshold.

8. The method (100) according to any one of the preceding claims, wherein each of the one or more second time intervals is equally long as or longer than each of the one or more first time intervals.

9. The method (100) according to any one of the preceding claims, wherein the predetermined transmission time is divided into a plurality of first time intervals and a plurality of second time intervals.

10. A non-transitory computer-readable storage medium having stored thereon instructions which, when executed in a device having at least one processor and a transmitter, causes the device to perform the method according to any one of claims 1 to 8.

11. A device (200) for estimating available transmission bandwidth on a network connection over which data files are to be transmitted within a predetermined transmission time at an average bitrate lower than a bitrate threshold, the device comprising:
a transmitter (210); and
circuitry (220) configured to execute:
a determining function (231) configured to determine a data file size for a first data file to be transmitted over the network connection;
a first dividing function (232) configured to divide the data file size by the predetermined transmission time, thereby determining a lowest average bitrate required to transmit the first data file within the predetermined transmission time;
a second dividing function (233) configured to divide a transmission time of the first data file into one or more first time intervals and one or more second time intervals, wherein each of the one or more first time intervals is followed by a second time interval of the one or more second time intervals unless the first time interval is a last time interval;
a first transmitting function (234) configured to cause the transmitter to transmit data of the first data file over the network connection during the one or more first time intervals at a bitrate higher than the determined lowest average bitrate;
a second transmitting function (235) configured to cause the transmitter to transmit remaining data of the first data file over the network connection during the one or more second time intervals at a bitrate lower than the bitrate during the one or more first time intervals, the bitrate during the one or more second time intervals being such that a resulting average bitrate of the transmission of data during the one or more first time intervals and the one or more second time intervals is equal to or higher than the determined lowest average bitrate but lower than the bitrate threshold; and
an estimating function (236) configured to estimate an available transmission bandwidth over the network connection based on feedback on the transmission of data of the first data file over the network connection during the one or more first time intervals at the bitrate higher than the determined lowest average bitrate.

12. The device (200) according to claim 11, wherein the data files are created and transmitted in sequence within a respective predetermined transmission time, wherein the respective predetermined transmission time is determined based on a time it takes to create each data file such that the sum of the respective predetermined transmission time of each of the data files is equal to the sum of the time it takes to create each of the data files.

13. The device (200) according to claim 11 or 12, wherein the data files are created with a quality set for their respective time of transmission over the network connection, wherein the circuitry is further configured to execute:
a setting function (237) configured to set the quality for a second data file subsequent to the first data file, wherein the quality for the second data file is determined in relation to the quality for the first data file and is based on the estimated available transmission bandwidth, such that:
on condition that the estimated available transmission bandwidth is equal to or below a first bandwidth threshold, setting a lower quality for the second data file than the quality of the first data file;
on condition that the estimated available transmission bandwidth is equal to or above a second bandwidth threshold higher than the first bandwidth threshold, setting a higher quality for the second data file than the quality of the first data file, wherein the second bandwidth threshold is higher than the first bandwidth threshold; and
on condition that the estimated available transmission bandwidth is between the first bandwidth threshold and the second bandwidth threshold, setting the same quality for the second data file as the quality of the first data file.

14. The device (200) according to any one of the claims 11-13, wherein the data files are media files.

15. The device (200) according to any one of the claims 10-13, wherein the one or more first time intervals are shorter than a time threshold.
